Europäisches Patentamt

European Patent Office

Office européen des brevets

(11) Veröffentlichungsnummer: **0 247 305**
**B1**

(12) **EUROPÄISCHE PATENTSCHRIFT**

(45) Veröffentlichungstag der Patentschrift:
01.08.90

(21) Anmeldenummer: **87103744.6**

(22) Anmeldetag: **14.03.87**

(51) Int. Cl.⁵: **C05D 5/00,** C05G 1/00,
C05G 3/00, C05G 5/00,
B01J 2/28

(54) Verfahren zum Granulieren wasserlöslicher Dünger mit hohem Kieseritanteil.

(30) Priorität: **28.05.86 DE 3618058**

(43) Veröffentlichungstag der Anmeldung:
**02.12.87 Patentblatt 87/49**

(45) Bekanntmachung des Hinweises auf die Patenterteilung:
**01.08.90 Patentblatt 90/31**

(84) Benannte Vertragsstaaten:
**AT CH FR IT LI**

(56) Entgegenhaltungen:
**DE-A- 1 592 587**
**FR-A- 2 574 398**
**JP-A-59 232 987**

(73) Patentinhaber: **KALI + SALZ AG,**
**Friedrich-Ebert-Strasse 160, D-3500 Kassel(DE)**

(72) Erfinder: **Löblich, Karl-Richard, Dr., Leibnizstrasse 106,**
**D-3013 Barsinghausen 1(DE)**
Erfinder: **Bruns, Günter, Vogelkamp 9,**
**D-3015 Wennigsen 1(DE)**
Erfinder: **Peuschel, Gerd, Dr., Am Westende 19,**
**D-3167 Burgdorf(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Der Pflanzennährstoff Magnesium hat in den letzten Jahren in Land- und Forstwirtschaft zunehmende Bedeutung bekommen, da viele Böden aus verschiedenen Gründen an diesem stark verarmt sind. Das natürlich vorkommende Magnesiumsulfat-Mineral Kieserit hat sich zur Behebung akuter Mangelzustände solcher Böden als besonders geeignet erwiesen. Im Vergleich zur Bedarfszeit auch von Pflanzen mit kurzer Vegetationszeit geht der Kieserit recht schnell in Lösung, obwohl seine im Labor gemessene Lösegeschwindigkeit geringer als die von anderen leicht wasserlöslichen Düngesalzen ist. Da er höhere Ionenkonzentrationen in der Bodenlösung zu erreichen gestattet als andere Verbindungsformen des Magnesiums, wird die Magnesiumaufnahme durch die Pflanzen gerade auch unter Streßbedingungen sehr erleichtert.

Die moderne Aufbereitung natürlicher Salzgesteine bringt ein kristallines Kieseritprodukt mit einer Körnung zwischen 0,1 und 1 mm hervor, welches nahezu staubfrei und deshalb umweltfreundlich beim Ausbringen in Feld und Wald ist. Für die meisten der heute verwendeten Ausbringegeräte stellt diese Körnung jedoch einen Nachteil dar. Daher wird gefordert, die Kieseritkörnung durch Granulierverfahren auf diejenige anzuheben, die für gekörnte Düngemittel handelsüblich ist und zur Streucharakteristik der Ausbringegeräte paßt.

Das Granulieren von reinem Kieserit und von leicht wasserlöslichen Düngern, welche einen Kieseritanteil von mehr als einem Viertel ihrer Masse haben, hat sich unerwartet als sehr schwierig erwiesen, obwohl Kieserit in Kombination mit reinem Wasser unlöslichen Düngestoffen, wie z.B. Schlacken- und/oder Gesteinsmehlen, als vorzügliches Bindemittel bekannt geworden ist, (vgl. Patentanmeldung P 35 41 184.8).

Dies hängt mit den physiko-chemischen Eigenschaften des Kieserits und denen der Substanzen zusammen, mit denen er kombiniert wird. Die beobachteten Phänomene ließen sich aber nur zum Teil deuten. Im wesentlichen bleibt man bei den Granulierversuchen auf Empirie angewiesen.

Zwar sind als Lösungsvorschläge für die gestellte Aufgabe schon einige Granulierverfahren bekannt geworden, doch entweder befriedigt die Stabilität der so erzeugten Granalien oder der durch die Hilfsstoffzugabe verminderte Magnesiumgehalt oder der Kostenaufwand für das Granulierverfahren nicht.

Nach dem Vorschlag der DE-PS 11 83 058 wird das Kristallwasser des Kieserits vor dem Granulieren thermisch weitgehend entfernt. Dadurch wird das Material reaktiver und vermag schnell zu hydratisieren. Durch die Hydratbildung sollen die Primärteilchen in den Granalien miteinander verbunden werden. Ganz abgesehen davon, daß das Kalzinieren hohe Energiekosten verursacht, bindet die befeuchtete Granuliermasse viel zu rasch ab, wodurch die Gutkornausbeute gering ist. Die DE-PS 21 06 212 schlägt vor, Kaliumsulfat-Magnesiumsulfat-Hydrate befeuchtet in eine Drehtrommel einzutragen, dort zu rollen und dabei auf 250 bis 350°C zu erwärmen, wobei sich die Granalien durch Sintern verfestigen sollen. Auch hierfür ist ein extrem hoher Energieaufwand nötig. Energetisch günstiger ist der Vorschlag der DE-PS 23 16 701, Kalisalz-Kieserit-Mischungen frischen künstlichen Langbeinit zuzusetzen. Dieses Verfahren hat sich beim Granulieren bestimmter Kaliumsulfat-Kieserit-Mischungen technisch bewährt, ist aber aus Qualitätsgründen nicht auf alle Mischungsverhältnisse übertragbar. Außerdem steht frischer Langbeinit nicht auf allen Standorten kostengünstig zur Verfügung.

Das Verfahren der DE-PS 27 48 152 verwendet Ammoniumsulfat als Granulierhilfsmittel für Kieserit. Das angefeuchtete Granuliergut wird gerollt und dann oberflächlich angetrocknet. Die Verfestigung erfolgt durch Hydratation während der extrem langen Reifezeit, liefert dann aber abriebfeste Granalien. Der Reifeprozeß erwies sich in der Praxis als zu schwer beherrschbar.

Deutlich bessere Ergebnisse erhält man beim Granulieren von Kieserit nach dem Vorschlag der DE-PS 31 48 404. Insbesondere hat sich Natriumsulfat als Granulierhilfsmittel bewährt. Nachteilig hat sich jedoch die hohe Einsatzmenge erwiesen, welche man nach Betriebserfahrungen benötigt, um wirklich abriebfeste Granalien zu erhalten. Zur Erzeugung der Hydratbindung müssen auch erhebliche Wassermengen im Produkt verbleiben, welche den Nährstoffgehalt senken.

Eine wichtige Voraussetzung für das Granulieren des Kieserits ist ein breites Kornspektrum mit einem hohen Anteil von Feingut unter 0,09 mm. Hierdurch wird beim Aufbau der einzelnen Granalie beim Rollen eine hohe Packungsdichte erzielt, welche wesentlich zur mechanischen Festigkeit beiträgt.

Befeuchtet man ein solches Granuliergut von idealer Primärkorn-Verteilung mit Wasser, so erhält man durch Rollen Granalien ausreichender Grünfeste, welche durch Ausreifen oder Trocknen zu abriebfesten Gebilden verfestigt werden können. Überraschenderweise ist ein solches Produkt unter Lagerhausbedingungen nicht länger als 3 Wochen stabil. Die Berstfeste von auf 2 % Restfeuchte getrockneten Kieseritgranalien nach diesem Verfahren durchläuft nach fünf Lagertagen mit 20 N/Korn ein Maximum und fällt nach 3 bis 4 Wochen auf 7 N/Korn ab, wobei der Abrieb im Test von 4 auf 38 % hochschnellt.

Ähnlich, wenn auch nicht ganz so extrem, verhalten sich Kieseritmischungen mit wachsenden Zusätzen an Kaliumsulfat. Beispielsweise erreicht eine Mischung von ca. 23 Gew.-Teilen Kaliumsulfat und 77 Gew.-Teilen technischen Kieserits mit optimalem Kornspektrum nach dem Granulieren und Trocknen nach fünf Tagen eine Berstfeste von 28 N/Korn, die nach 4 Wochen auf 19 N/Korn abfällt, wobei der Abrieb auf 15 % ansteigt. An den Kaliumsulfat enthaltenden Mischungen wurde noch eine andere nachteilige Beobachtung gemacht. Da die anfangs optimal befeuchtete Granuliermischung zur Erwärmung und zum vorzeitigen Austrocknen neigt, fällt die Größenverteilung der beim Rollen entstehenden Granalien sehr ungünstig aus. Der Rückgutkreislauf wird stark sowohl durch einen hohen Überkornanteil als auch durch grießartiges Unterkorn belastet. Ursache für dieses Verhalten scheinen die rasche Hydratation feinster Kieseritteilchen und deren Umsatz mit dem Kaliumsulfat zu Doppelsalzen zu sein.

Beim Granulieren von Mischungen mit Kaliumchlorid und einem Kieseritanteil über 30 % tritt zusätzlich eine erhöhte Empfindlichkeit gegen Luftfeuchte auf. Diese könnte mit der Hygroskopizität des bei der Bildung sulfatischer Doppelsalze entstehenden Magnesiumchlorids erklärt werden.

Es wurde nun überraschend gefunden, daß Substanzen aus der Klasse der Zucker und deren hydrophile Derivate die unerwünschten Prozesse in angefeuchteten Kieseritmischungen verzögern und die Gefügelockerung in lange gelagerten Granalien unterdrücken. Die Mischungen trocknen beim Rollen nicht vorzeitig aus und zeigen beim Lagern im Gegensatz zu den ohne diesen Zusatz hergestellten Granalien keine Ausblühungen.

Im folgenden werden bevorzugte Ausführungsformen des Verfahrens erläutert.

Das Verfahren der Erfindung ist dadurch gekennzeichnet, daß dem Granuliergut vor oder mit der Zugabe der Befeuchtungsflüssigkeit lösliche und/oder leicht kolloid lösliche Substanzen aus der Klasse der Mono-, Di- und Polysaccharide und/oder deren einfachen hydrophilen Derivaten in fester Form oder als Lösung, an deren Feststoffgehalt diese den Hauptanteil haben, in einer Dosierung zwischen 0,1 und 5 % Trockenmasse, bezogen auf das Trockengewicht der frischen Granuliermischung, zugesetzt und die Granalien nach ihrem Aufbau auf eine Restfeuchte von 1 bis 6 % der in ihnen enthaltenen Kieseritmasse getrocknet werden.

Das Verfahren der Erfindung ist weiter durch die Verwendung von Saccharose in fester Form oder als zuckerreiche Melasse in einer Dosierung von 1 bis 5 % Trokkenstoff auf die frische kieserithaltige Granuliermasse gekennzeichnet.

Eine weitere Kennzeichung ist die Verwendung von Invertzuckerlösung.

Ferner ist das Verfahren der Erfindung dadurch gekennzeichnet, daß dem kieserithaltigen Granuliergut Lactose, z.B. in Form von Molke oder von aufkonzentrierten Restflüssigkeiten der Milcheiweißgewinnung, in einer Dosierung von 0,5 bis 4 % Trockenstoff auf das Frischgut zugegeben wird.

Das Verfahren ist weiterhin dadurch gekennzeichnet, daß die Mono- und/oder Disaccharide zusammen mit gequollener Stärke im Massenverhältnis 1 : 2 bis 2 : 1 in einer Dosierung der Saccharidmischung von 0,3 bis 2 % eingesetzt werden.

Ferner ist das Verfahren dadurch gekennzeichnet, daß dem zuckerartigen Stoff ein hydrophiles Zuckerderivat, wie z.B. Carboximethylcellulose oder ein Aminozucker zugesetzt wird.

Zwar ist die Verwendung von Zuckern, z.B. in Form zukkerreicher Melasse, in der Futtermittelindustrie als Hilfsmittel zum Pelletieren geschroteter Futtermittelgrundstoffe pflanzlicher oder tierischer Herkunft bekannt, doch liegt dort eine Aufgabenstellung vor, welche nicht auf Düngemittel anwendbar ist. Bei den Futtermitteln steht die klebende und staubbindende Wirkung der Zuckerlösungen im Vordergrund, zu der die feuchtigkeitsregelnde Eigenschaft unterstützend hinzu kommt. Da den zuckerhaltigen Abfallstoffen selbst ein Nährwert zukommt, werden diese in hoher Dosierung zur Bindung der Futtermittelgrundstoffe eingesetzt.

Zum Stand der Technik wurde schon ausgeführt, daß es beim Granulieren kieseritreicher Düngemittelmischungen nicht auf ein Verkleben der Primärteilchen durch Hilfsstoffe ankommt. Granalien aus reinem Kieserit erreichen auch ohne Hilfsmittel eine ausreichende Festigkeit. Beim Lagern setzt jedoch ein Strukturwandel ein, welcher nach und nach den Widerstand gegen Abrieb schwächt. Noch schneller erfolgt die Aneinanderbindung der Primärteilchen beim Granulieren kieserithaltiger Mischungen mit Kaliumsulfat, weil bei diesen zur Bildung von Brücken aus hydratisierten Magnesiumsulfaten noch eine solche durch Bildung von Doppelsalzkristallen hinzukommt. Weil in den Kaliumsulfat enthaltenden Kieseritmischungen die Prozesse zu schnell ablaufen, ist die Gutkornausbeute am Ende des Rollvorgangs sehr schlecht. Es geht also darum, die beim Aufbau der Granalien ablaufenden Hydratations- und Kristallisationsprozesse durch Zusätze anfänglich zu bremsen und dann in eine Richtung zu lenken, die lagerstabile Brücken zwischen den Primärteilchen in den Granalien hervorbringt.

Es wurde auch bei Granuliermischungen aus Phosphatschlackenmehl und Kaliumchlorid versucht, die Produktqualität durch den Zusatz zuckerartiger Substanzen zur Granuliermasse zu verbessern. Dies gelang nur mit reiner Stärke, während molekulardispers lösliche Zucker die Festigkeit gegen Abrieb herabsetzte. Hieraus geht hervor, daß die günstige Wirkung von zuckerartigen Substanzen auf kieseritreiche Produkte aus wasserlöslichen Düngesalzen keineswegs selbstverständlich ist.

Die Erfindung wird durch folgende Beispiele verdeutlicht:

Beispiel 1

Zu einer Mischung von 23 Gew.-Teilen Kaliumsulfat und 77 Gew.-Teilen Kieserit wurden 3 Gew.-Teile Melasse mit 70 % Feststoffgehalt und 9 Gew.-Teile Wasser zugesetzt. Nach dem Mischen und Rollen wurden die Granalien auf 2 % Restfeuchte getrocknet. Die Anfangsfestigkeit war etwas geringer als bei Granalien ohne Melasse, stieg dann aber kontinuierlich beim Lagern an. Nach 4 Wochen ergab der Test 6 % Abrieb gegenüber 15 % bei unbehandelten Granalien. Die Gutkornausbeute lag mit 56 % deutlich über der Ausbeute von 35 % mit einer Mischung ohne Melasse.

Beispiel 2

Der Zusatz von 3 Gew.-Teilen einer Invertzuckerlösung mit einem Feststoffgehalt von 40 % auf die Kaliumsulfat-Kieserit-Mischung des vorigen Beispiels brachte Granalien hervor, die auf 1,5 % Restfeuchte getrocknet nach 4 Wochen 8 % Abrieb hatte. Die Gutkornausbeute lag bei 48 %.

## Beispiel 3

225 Gew.-Teile Kaliumsulfat, 400 Gew.-Teile eines aufbereitungsfrischen Kieserits mit einer mittleren Körnung nahe 0,4 mm und 365 Gew.-Teile eines nachgemahlenen Kieserits, von welchem mindestens 80 % durch ein Sieb von 0,09 mm Maschenweite gehen, werden mit 6 Gew.-Teilen Melasse und 2 Gew.-Teilen Stärke, die in 40 Gew.-Teilen Wasser durch Erwärmen kolloid gelöst werden, sowie weiteren 80 Gew.-Teilen Wasser versetzt und durchgemischt. Beim Rollen dieser feuchten Mischung entstehen Granalien von hoher Grünfeste mit sehr guter Ausbeute. Nach dem Trocknen der Granalien auf 2 % Restfeuchte werden sofort 9 % Abrieb im Test gemessen, der schnell auf 6 % zurückgeht. Nach 4 Wochen Lagerung wird eine Berstfeste von 37 N/Korn und ein Abrieb von 4 % bestimmt.

## Beispiel 4

Die grünen Granalien aus Beispiel 3 werden auf 4,5 % Restfeuchte getrocknet und der Abrieb geprüft. Unmittelbar nach dem Trocknen findet man 12 %, danach verbessert sich die Abriebfeste auf fast die gleichen Werte wie in Beispiel 3. Nach vierwöchiger Lagerung liefert der Abriebtest 5 %. Auch mit der höheren Restfeuchte ist die Lagerfähigkeit gut.

## Beispiel 5

500 Gew.-Teile Kaliumsulfat und 500 Gew.-Teile Kieserit geeigneter Körnung werden mit 110 Gew.-Teilen Wasser, zu welchem 10 Gew.-Teile eines Molkekonzentrats mit 50 % Feststoff und 1 Gew.-Teil Carboximethylcellulose zugemischt wird, versetzt, durchgemischt und granuliert.

Nach dem Trocknen auf 2,5 % Restfeuchte werden Granalien erhalten, welche schon zu Beginn recht abriebfest sind. Nach vierwöchiger Lagerung werden 3 % Abrieb gemessen.

Zu den Beispielen 1 bis 5 läßt sich ergänzend ausführen, daß sich die Granalienqualität nicht wesentlich ändert, wenn man den angegebenen Rezepturen Rückgut in Form von gemahlenem Über- und Unterkorn hinzufügt. Die Zusatzstoffe werden in einem solchen Fall nur auf den Frischgutanteil bezogen, während die Menge der Befeuchtungsflüssigkeit an der Granulierfähigkeit der Gesamtmischung unter Einbeziehung des Rückgutanteils zu bemessen ist.

## Beispiel 6

Reiner Kieserit optimaler Körnung wird mit 5 Gew.-Teilen Lactose auf 1000 Teile Kieserit vermischt, mit Bittersalzlösung bis zur Granulierfähigkeit angefeuchtet und gerollt. Es entstehen grünfeste Granalien mit guter Ausbeute. Die getrockneten Granalien mit 2 % Restfeuchte zeigen nach vierwöchiger Lagerung eine Berstfeste von 24 N/Korn und 6 % Abrieb.

## Beispiel 7

400 Gew.-Teile Kieserit-Rückgut mit einer mittleren Körnung von ca. 0,2 mm werden mit 600 Gew.-Teilen frischem Kieserit, von denen rund 1/3 durch ein Sieb von 0,09 mm gehen sollte, vorgemischt. Diese Mischung wird mit einem Gemisch aus 70 Gew.-Teilen Wasser und 12 Gew.-Teilen einer auf 60 % Feststoffgehalt aufkonzentrierten Restflüssigkeit aus der Milcheiweißgewinnung befeuchtet und 3 min lang im Pflugscharmischer durchgearbeitet.

Durch Rollen entstehen grünfeste Granalien, welche unmittelbar nach dem Trocknen auf 5 % Restfeuchte 6 N/Korn, auf 2 % Restfeuchte 9 N/Korn und auf 1 % Restfeuchte 12 N/Korn Berstfeste haben. Die Abriebfeste ist schon am Anfang befriedigend. Nach vierwöchiger Lagerzeit werden bei 1 bis 5 % Restfeuchte 2 bis 4 % Abrieb bei einer Berstfeste zwischen 30 und 40 N/Korn gemessen. Geringere oder höhere Restfeuchten als 1 bis 5 % verschlechtern die Granalienqualität deutlich.

Im Labor konnte auch gezeigt werden, daß kleine Zusätze von Aminozuckern zu normalen Zuckern die Einsatzmengen an Granulierhilfsmittel ganz wesentlich zu reduzieren vermögen. Die Verwendung der genannten Granulierhilfsmittel in der Praxis ist natürlich auch eine Frage der Beschaffungskosten. Melasse oder aufkonzentrierte Restflüssigkeiten der Milchverarbeitung sind im Vergleich zu den reinen Zuckern sehr kostengünstig. Ihre Anwendung wird daher bevorzugt, zumal sich sowohl im Labor als auch in Betriebsversuchen gezeigt hat, daß die in diesen technischen Zuckerlösungen vorliegenden Begleitstoffe das Granulierergebnis eher noch etwas verbessern. Stärke und die teuren Zuckerderivate werden eingesetzt, wenn es um eine Reduzierung der Gesamtmenge an Granulierhilfsmitteln unter Aufrechterhaltung der Produktqualität geht.

Das Verfahren der Erfindung liefert beim Granulieren kieseritreicher wasserlöslicher Dünger Granalien mit einer glatteren Oberfläche als die bekannt gewordenen oder die von uns getesteten Verfahren.

Der technische Fortschritt durch das Verfahren besteht auch darin, daß bei der bevorzugten Hilfsmitteldosierung zwischen 0,5 und 2 % und das Trocknen auf eine bevorzugte Restfeuchte von 1 bis 2,5 %, der Nährstoffgehalt im Produkt nur auf ca. 95,5 bis 97 % des Gehaltes der zu granulierenden Grundstoffe zurückgeht. Bei den auf diesem Gebiet bekannten oder geprüften Verfahren hat man mit Gehaltsminderungen zwischen 8 und 12 % relativ zu rechnen.

## Patentansprüche

1. Verfahren zum Granulieren von wasserlöslichen Düngemitteln, welche Kieserit mit einem Massenanteil zwischen 25 und 100 % enthalten und deren Primärteilchen ein sehr breites Kornspektrum mit einem Anteil von mindestens 20 % unter 0,09 mm aufweisen, dadurch gekennzeichnet, daß dem Granuliergut vor oder mit der Zugabe der Befeuchtungsflüssigkeit lösliche und/oder leicht kolloid lösliche Substanzen aus der Klasse der Mono-, Di-, und Polysaccharide und/oder deren einfachen hydrophilen Derivaten in fester Form oder als Lösung, an deren Feststoffgehalt diese den Hauptanteil haben, in einer Dosierung zwischen 0,1 und 5 % Trockenmasse, bezogen auf das Trockengewicht der frischen Granuliermischung, zugesetzt und die Granalien nach ihrem Aufbau auf eine Restfeuchte von 1 bis 6 % der in ihnen enthaltenen Kieseritmasse getrocknet werden.

2. Verfahren nach Anspruch 1, dadurch gekennzeichnet, daß Saccharose in fester Form oder als zuckerreiche Melasse in einer Dosierung von 1 bis 5 % Trockenstoff auf die frische kieserithaltige Granuliermasse verwendet wird.

3. Verfahren nach Anspruch 1, dadurch gekennzeichnet, daß Invertzucker fest oder gelöst verwendet wird.

4. Verfahren nach Anspruch 1, dadurch gekennzeichnet, daß dem kieserithaltigen Granuliergut Lactose, z.B. in Form von Molke oder von aufkonzentrierten Restflüssigkeiten der Milcheiweißgewinnung, in einer Dosierung von 0,5 bis 4 % Trockenstoff auf das Frischgut zugegeben wird.

5. Verfahren nach einem der Ansprüche 1 bis 4, dadurch gekennzeichnet, daß die Mono- und/oder Disaccharide zusammen mit gequollener Stärke im Massenverhältnis 1 : 2 bis 2 : 1 in einer Dosierung der Saccharidmischung von 0,3 bis 2 % eingesetzt werden.

6. Vefahren nach einem der Ansprüche 1 bis 5, dadurch gekennzeichnet, daß dem zuckerartigen Stoff ein hydrophiles Zuckerderivat, wie z.B. Carboximethylcellulose, oder ein Aminozucker zugesetzt wird.

## Revendications

1. Procédé de granulation d'engrais hydrosolubles qui contiennent de la kieserite en une proportion pondérale comprise entre 25 et 100%, et dont les particules primaires présentent un spectre granulométrique très large, avec une proportion d'au moins 20% inférieure à 0,09 mm, caractérisé en ce qu'il consiste à ajouter au produit à granuler, avant ou en même temps que l'addition du liquide d'humidification, en une dose représentant en poids sec de 0,1 à 5% du poids sec du mélange frais à granuler, des substances solubles et/ou facilement solubles sous forme colloïdale, appartenant à la classe des monosaccharides, des disaccharides et des polysaccharides, et/ou de leurs dérivés hydrophiles simples sous forme solide ou sous forme de solutions, dont ils représentent la proportion prépondérante de la teneur en matières solides, et à sécher les granulés après leur formation, jusqu'à une humidité résiduelle représentant de 1 à 6% de la masse de kiesérite qu'ils contiennent.

2. Procédé suivant la revendication 1, caractérisé en ce qu'il consiste à utiliser du saccharose sous forme solide ou sous forme de mélasse riche en sucre en une dose représentant de 1 à 5%, en matières sèches, de la masse à granuler fraîche contenant de la kiesérite.

3. Procédé suivant la revendication 1, caractérisé en ce qu'il consiste à utiliser du sucre inverti sous forme solide ou à l'état dissous.

4. Procédé suivant la revendication 1, caractérisé en ce qu'il consiste à ajouter au produit à granuler contenant de la kiesérite, du lactose, par exemple sous la forme de lactorsérum ou de liquides résiduels concentrés de l'obtention de l'albumine du lait, en une doese représentant de 0,5 à 4%, en matières sèches, du produit frais.

5. Procédé suivant l'une des revendications 1 à 4, caractérisé en ce qu'il consiste à utiliser les monosaccharides ou les disaccharides en même temps que de l'amidon gonflé, en un rapport pondéral de 1:2 à 2:1, avec une dose du mélange de saccharides de 0,3 à 2%.

6. Procédé suivant l'une des revendications 1 à 5, caractérisé en ce qu'il consiste à ajouter au sucre un dérivé hydrophile de sucre, comme par exemple de la carboxyméthyl-cellulose ou un aminosucre.

## Claims

1. A process for granulating water soluble fertilizers which contain kieserite with a mass content of between 25 and 100%, and which have primary particles within a very wide grain spectrum with a fraction of at least 20% under 0.09 mm, the process comprising the steps of providing a granulating material including kieserite; applying to the granulated material moisturizing liquid; prior to or during applying the moisturizing liquid, adding to the granulating material soluble and/or somewhat colloidal soluble substances from the class of mono-, di- and polysaccharide and/or their simple hydrophilic derivatives in solid form or in a solution in which they provide a main part, in a dose of between 0.1 and 5% dry mass relative to a dry weight of the fresh granulated material; forming the granules; and drying the granules after their formation to a residual moisture of 1 to 6% of kieserite mass contained in them.

2. A process as defined in claim 1, wherein said adding includes adding of saccharose in solid form or as sugar-rich melasse in a dose of 1 to 5% dry material to the fresh kieserite-containing granulating material.

3. A process as defined in claim 1, wherein said adding step includes adding invert sugar in solid or dissolved form.

4. A process as defined in claim 1, wherein said adding step includes adding lactose in a dose of 0.5 to 4% dry material to the fresh granulating material, or the lactose in form of milk or concentrated residual liquid of milk albumin recovery.

5. A process as defined in claim 1, wherein said adding step includes adding the mono and/or disaccharide together with soaked starch in mass ratio 1:2 to 2:1 in a dose of the saccharide mixture of 0.3 to 2%.

6. A process as defined in claim 1, and further comprising the step of adding to the sugar-like material of a hydrophilic sugar derivative such as carboximethyl cellulose, or an amino sugar.